# EUROPÄISCHE PATENTSCHRIFT

(11) **EP 2 577 012 B1**
(45) Veröffentlichungstag und Bekanntmachung des Hinweises auf die Patenterteilung: **20.01.2016**
(21) Anmeldenummer: 11721314.0
(22) Anmeldetag: 25.05.2011
(51) Int. Cl.: F01N 3/025

(54) **BEHEIZBARE FLUIDENTNAHMEVORRICHTUNG**
HEATABLE FLUID REMOVAL DEVICE
DISPOSITIF CHAUFFANT DE PRISE DE FLUIDE

(30) Priorität: 01.06.2010 DE 102010029594
(43) Veröffentlichungstag der Anmeldung: 10.04.2013
(73) Patentinhaber: Robert Bosch GmbH, 70442 Stuttgart (DE)
(72) Erfinder: HANNEKE, Juergen, 70499 Stuttgart (DE); SEMET, Jan, 73553 Alfdorf-Vordersteinenberg (DE)
(86) Internationale Anmeldenummer: PCT/EP2011/058517
(87) Internationale Veröffentlichungsnummer: WO 2011/151229

(56) Entgegenhaltungen:
- EP-A2- 2 336 515
- WO-A1-2007/141312
- DE-A1-102008 043 197

## Beschreibung

### Stand der Technik:

Die Erfindung betrifft eine beheizbare Fluidentnahmevorrichtung für einen Fluidtank.

Es ist bekannt, den Abgasen eines Verbrennungsmotors, insbesondere eines Dieselmotors, ein Fluid, wie z. B. eine wässrige Harnstofflösung, beizufügen, um in den Abgasen vorhandene Schadstoffe, insbesondere Stickoxide, zu reduzieren. Wässrige Harnstofflösung gefriert bei niedrigen Umgebungstemperaturen und der Gefrierpunkt kann durch die Zugabe von Additiven nur in einem begrenzten Bereich abgesenkt werden, ohne die Wirksamkeit der Harnstofflösung bei der Abgasnachbehandlung negativ zu beeinflussen.

Eine Möglichkeit, um die Betriebssicherheit eines solchen Systems zur Schadstoffreduktion auch bei niedrigen Umgebungstemperaturen zu gewährleisten, besteht darin, das Fluid in einem beheizbaren Tankbehälter zu lagern. Durch Beheizen des Tankbehälters kann ein Einfrieren des Fluids verhindert werden und/oder eingefrorenes Fluid kann durch Beheizen des Tankbehälters aufgetaut werden.

Häufig ist in bekannten Tanksystemen ein Filter vorgesehen, um das aus dem Tankbehälter entnommene Fluid zu filtern und ein Verstopfen der Fluidleitungen und/oder Einspritzdüsen durch Partikel, die sich in dem Fluid befinden, zu verhindern.

Es ist bekannt, den Filter und die Heizung in einer Fluidentnahmevorrichtung zu kombinieren.

EP 2 336 515 A2 offenbart ein Dosiermodul zum Dosieren eines flüssigen Reduktionsmittels für ein Verbrennungsabgasbehandlungssystem, das einen umschlossenen Behälter mit einer Oberseite, einem Boden, einer oder mehreren Seiten, einem Einlass und einem Auslass, eine, Heizvorrichtung, die in dem Reservoir angeordnet ist, ein Filterelement, das zwischen dem Auslass und dem flüssigen Reduktionsmittel in dem Reservoir angeordnet ist, und ein Wärmesenkenelement hat, das in thermischem Kontakt mit dem Heizer steht und zwischen dem Filterelement und dem Auslass angeordnet ist.

DE 10 2008 043 197 A1 offenbart eine Filtereinrichtung, insbesondere einen Flüssigkeitsfilter, mit einem Filterelement, das in einem Filtergehäuse angeordnet ist, mit einer Heizung zum Erwärmen eines durch die Filtereinrichtung strömendem Mediums, und mit einem Wassersensor zum Erkennen von im Filtergehäuse gesammeltem Wasser, wobei die Heizung mit mindestens einer Heizbahn ausgestaltet ist und der Wassersensor in baulicher Einheit mit der Heizbahn ausgebildet ist.

### Offenbarung der Erfindung:

Es ist eine Aufgabe der Erfindung, eine Fluidentnahmevorrichtung für einen Tankbehälter bereit zu stellen, welche ein effektives Beheizen von Fluid, das im Tankbehälter gespeichert ist, ermöglicht.

Eine erfindungsgemäße Fluidentnahmevorrichtung hat wenigstens ein Filterelement, das ausgebildet ist, um aus dem Tank zu entnehmendes Fluid zu filtern, und wenigstens ein Heizelement, das ausgebildet ist, um Fluid, das in dem Tank gespeichert ist, zu erwärmen. Dabei sind das Heizelement und das Filterelement derart in der Fluidentnahmevorrichtung angeordnet, dass im Betrieb wenigstens ein Bereich des Heizelementes in Kontakt mit durch das Filterelement gefiltertem Fluid ist.

Dadurch, dass im Betrieb wenigstens ein Bereich des Heizelementes in Kontakt mit gefiltertem Fluid ist, ist das gefilterte Fluid nicht durch das Filterelement, dessen Filtermaterial oft eine schlechte Wärmeleitfähigkeit aufweist und/oder durch eine Plissierung (Faltung) zu einem großen räumlichen Abstand zwischen dem Heizelement und dem gefilterten Fluid führt, thermisch von dem Heizelement isoliert.

Das gefilterte Fluid ist daher besonders effektiv durch das Heizelement erwärmbar. Gefrorenes Fluid kann sehr schnell aufgetaut und dem Abgasreduktionssystem in flüssiger Form zur Verfügung gestellt werden. Das Abgasreduktionssystem ist so auch bei niedrigen Umgebungstemperaturen, die unterhalb des Gefrierpunktes des Fluids liegen, schnell einsatzbereit.

Dabei ist im Betrieb wenigstens ein Bereich des Heizelementes in Kontakt mit Fluid, das noch nicht durch das Filterelement gefiltert ist. Durch ein solches Heizelement ist auch nicht gefiltertes Fluid von dem Heizelement erwärmbar und ggf. auftaubar. Die Einsatzfähigkeit und Zuverlässigkeit des Abgasreduktionssystems wird dadurch noch weiter verbessert.

Dabei weist die Vorrichtung einen Flansch auf, der zur Aufnahme des Heizelementes ausgebildet ist. An einem Flansch kann das Heizelement besonders einfach und sicher befestigt werden.

In einer Ausführungsform weist das Heizelement wenigstens einen Bereich auf, der in ein Volumen hineinragt, in dem sich im Betrieb von dem Filterelement gefiltertes Fluid befindet. Durch einen solchen, in ein Volumen mit gefiltertem Fluid hineinragenden Bereich kann gefiltertes Fluid besonders effektiv erwärmt werden. Insbesondere kann das Filtermaterial, welches häufig eine starke thermische Isolierung zwischen dem Heizelement und dem gefilterten Fluid darstellt, effektiv umgangen werden.

In einer Ausführungsform ist das Heizelement so ausgebildet, dass es zur Aufnahme des Filterelementes geeignet ist. Dadurch kann das Filterelement besonders einfach so in der Vorrichtung angebracht und mit dem Heizelement kombiniert werden, dass wenigstens ein Bereich des Heizelementes in Kontakt mit dem Filterelement ist. Wenn das Filterelement in Kontakt mit dem Filterelement ist, kann effektiv Wärme von dem Heizelement an das Filterelement übertragen werden, um ein Einfrieren des Filterelementes zu verhindern und/oder Fluid, dass sich innerhalb des Filterelementes befindet, aufzutauen. Auch wird so ein besonders einfacher und kostengünstiger Auf- und Zusammenbau der Vorrichtung ermöglicht.

In einer Ausführungsform ist das Filterelement in einen Aufnahmeraum des Heizelementes eingespritzt. Durch Einspritzen von Filtermaterial in einen dafür vorgesehenen Aufnahmeraum des Heizelementes kann der Schritt des Montierens des Filterelementes in dem Heizelement eingespart werden. Dies ermöglicht eine besonders einfache, fluiddichte und günstig herzustellende Kombination des Filterelementes mit dem Heizelement.

In einer Ausführungsform weist das Heizelement ein Wärmeleitprofil auf. Durch ein Wärmeleitprofil ist die von dem Heizelement erzeugte Wärme besonders effektiv an das Fluid übertragbar. In einer Ausführungsform enthält das Wärmeleitprofil Aluminium. Aluminium weist eine hohe Wärmeleitfähigkeit und ein geringes Gewicht auf, so dass durch die Verwendung von Aluminium ein besonders wärmeleitfähiges und leichtes Wärmeleitprofil herstellbar ist. Das Wärmeleitprofil kann insbesondere als Aluminiumspritzgussteil ausgebildet sein. Dies ermöglichte eine besonders einfache und kostengünstige Herstellung des Wärmeleitprofils.

In einer Ausführungsform weist das Heizelement und/oder das Filterelement eine wärmeleitfähige Kunststoffummantelung auf. Die Kunststoffummantelung, die z.B. ein Kunststoffmaterial wie HDPE mit mineralischer Füllung, wie z.B. Talkum, umfasst, schützt das Heizelement vor Korrosion, isoliert das Heizelement elektrisch von dem umgebenden Fluid und ermöglicht so einen sicheren elektrischen Betrieb des Heizelementes. Eine Kunststoffummantelung mit hoher Wärmeleitfähigkeit überträgt die von dem Heizelement erzeugte Wärme besonders effektiv an das umgebende Fluid.

Die Verwendung eines Wärmeleitprofils, das z. B. aus Aluminiumspritzguss hergestellt und mit einer gut wärmeleitfähigen Kunststoffummantelung versehen ist, ermöglicht eine große geometrische Gestaltungsfreiheit bei der Herstellung des Heizelementes. Das Heizelement kann daher so hergestellt werden, dass es besonders gut an vorgegebene Geometrien des Tankbehälters und/oder der Fluidentnahmevorrichtung angepasst ist.

In einer Ausführungsform weist das Heizelement wenigstens einen äußeren und einen inneren ringförmigen Bereich auf, wobei die beiden ringförmigen Bereiche koaxial zueinander angeordnet und vorzugsweise durch wenigstens einen radialen Bereich des Heizelementes miteinander verbunden sind. Ein solcher Aufbau ist kostengünstig herstellbar und ermöglicht gleichzeitig, das Filterelement gut in dem Heizelement aufzunehmen und die von dem Heizelement erzeugte Wärme effektiv über eine große Fläche an das Filterelement und Fluid auf beiden Seiten des Filterelementes zu übertragen.

In einer Ausführungsform sind an wenigstens einem Bereich des Heizelementes Rippen ausgebildet. Durch an dem Heizelement ausgebildete Rippen wird die Kontaktfläche zwischen dem Heizelement und dem Fluid vergrößert und die Wärmeübertragung von dem Heizelement an das Fluid verbessert.

In einer Ausführungsform wird das Heizelement unmittelbar bei der Herstellung des Flansches innerhalb des Flansches ausgebildet, z.B. indem der Flansch und das Heizelement als einstückiges Spritzgussteil hergestellt werden. Das Filterelement wird dann z.B. durch Verschweißen, Verkleben, Verschrauben oder Verklemmen bzw. Verclipsen an dem Flansch montiert. Dies erspart den Herstellungsschritt des Montierens des Heizelementes an dem Flansch und ermöglicht einen besonders tiefen Ansaugpunkt für die Fluidentnahme. Alternativ können der Flansch, das Heizelement und das Filterelement als separate Teile hergestellt werden, die durch Verschweißen, Verkleben, Verschrauben oder Verklemmen bzw. Verclipsen miteinander verbunden werden.

Die Erfindung umfasst auch einen Fluidtank mit einer erfindungsgemäßen Fluidentnahmevorrichtung. Ein solcher Fluidtank ermöglicht es, das in dem Fluidtank gespeicherte Fluid besonders effektiv zu heizen und zu filtern und ist kostengünstig herstellbar.

Die Erfindung wird im Folgenden anhand der beigefügten Figuren näher erläutert. Dabei zeigt:
Figur 1a eine erste perspektivische Ansicht eines Ausführungsbeispiels eines erfindungsgemäßen Heizelementes;
Figur 1b eine zweite perspektivische Ansicht des erfindungsgemäßen Heizelementes aus Figur 1a;
Figur 2a ein erfindungsgemäßes Heizelement mit einem Filterelement in der ersten perspektivischen Ansicht;
Figur 2b ein erfindungsgemäßes Heizelement mit einem Filterelement in der zweiten perspektivischen Ansicht;
Figur 3a eine perspektivische Ansicht eines Ausführungsbeispiel eines Flansches einer erfindungsgemäßen Fluidentnahmevorrichtung;
Figur 3b eine perspektivische Ansicht des Flansches aus Figur 3a mit einer erfindungsgemäßen Heizvorrichtung;
Figur 3c eine perspektivische Ansicht des Flansches und des Heizelementes aus Figur 3b, wobei ein Filterelement in das Heizelement eingebracht ist; und
Figur 4 eine seitliche Schnittansicht durch einen Flansch mit einer erfindungsgemäßen Fluidentnahmevorrichtung.

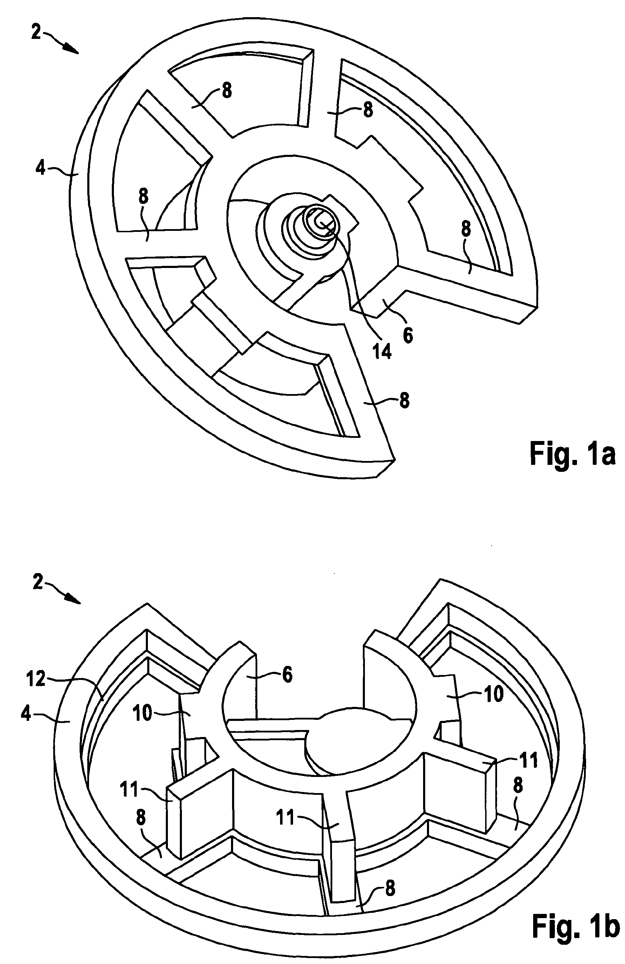

Figur 1a zeigt eine perspektivische Ansicht eines erfindungsgemäßen Heizelementes 2.

Das erfindungsgemäße Heizelement 2 weist einen äußeren kreisbogenförmigen Bereich 4 und einen inneren kreisbogenförmigen Bereich 6 auf, die koaxial zueinander angeordnet sind und jeweils in etwa ¾ des Umfangs eines Vollkreises beschreiben. Der äußere bogenförmige Bereich 4 und der innere bogenförmige Bereich 6 sind durch fünf radiale Bereiche (Speichen) 8, die in etwa gleichen Winkelabständen zueinander angeordnete sind, miteinander verbunden.

Innerhalb des äußeren ringförmigen Bereichs 4, des inneren ringförmigen Bereichs 6 und/oder der Speichen 8 ist jeweils eine in der Fig. 1a nicht sichtbare Heizvorrichtung, die z. B. als Heizdraht oder als durch ein PTC-Element beheizbarer Alukörper ausgebildet ist, angeordnet. Im Betrieb des Heizelementes 2 erwärmt sich die Heizvorrichtung und gibt Wärme über den äußeren ringförmigen Bereich 4, den inneren ringförmigen Bereich 6 und/oder die Speichen 8 an die Umgebung, insbesondere an Fluid, welches sich in der Umgebung des Heizelementes 2 befindet, ab.

Am gemeinsamen Mittelpunkt der beiden ringförmigen Bereiche 4, 6 ist eine Anschlussvorrichtung 14 mit elektrischen Kontakten vorgesehen, die elektrisch mit dem Heizdraht bzw. dem PTC-Element verbunden sind und es ermöglichen, die Heizvorrichtung mit elektrischer Energie zu versorgen. Die Anschlussvorrichtung 14 kann als Steck-, Schraub- und/oder Schweißverbindung ausgebildet sein. Vorzugsweise ist die Anschlussvorrichtung 14 mit einem isolierenden Kunststoffüberzug versehen, welcher die Steck-, Schraub- bzw. Schweißverbindung elektrisch von dem Fluid isoliert, so dass elektrisch leitfähiges Fluid nicht zu einem elektrischen Kurzschluss oder unerwünschten elektrischen Kriechströmen führt. Der Kunststoffüberzug, der z.B. ein Kunststoffmaterial wie HDPE mit mineralischer Füllung, wie z.B. Talkum, umfasst, schützt die Heizvorrichtung auch vor Korrosion durch das Fluid.

Figur 1b zeigt eine Ansicht des in der Figur 1a gezeigten Heizelementes 2 aus einer anderen Perspektive. In dieser Ansicht ist gut erkennbar, dass der innere bogenförmige Bereich 6 in einer Richtung, die in einem rechten Winkel zur Ebene des vom inneren bogenförmigen Bereich 6 beschriebenen Kreisbogens angeordnet ist, eine größere Höhe als der äußere bogenförmige Bereich 4 aufweist.

An zwei einander gegenüberliegenden Abschnitten des inneren bogenförmigen Bereichs 6 ist jeweils eine Aufnahmetasche 10 zur Aufnahme je eines PTC-Heizelementes vorgesehen. Durch in die Taschen 10 eingeführte PTC-Heizelemente ist das Fluid besonders einfach und effektiv beheizbar. Dabei sind in den Taschen 10 in der Figur nicht sichtbare mechanische Aufnahmevorrichtungen für die PTC-Heizelemente vorgesehen.

In den Aufnahmevorrichtungen sind in der Figur nicht sichtbare elektrische Kontakte vorgesehen, die ausgebildet sind, um die PTC-Heizelemente im Betrieb mit elektrischem Strom zu versorgen. Die PTC-Heizelemente können in die Aufnahmevorrichtungen eingepresst sein oder durch Federn darin gehalten werden.

Zusätzlich sind vom inneren bogenförmigen Bereich 6 des Heizelementes 2 radial nach außen hervorstehende Rippen 11 ausgebildet, welche die Fläche, an der das Heizelement 2 im Betrieb in direktem Kontakt mit dem Fluid steht, vergrößern.

Auf der dem inneren bogenförmigen Bereich 6 zugewandten Innenseite des äußeren bogenförmigen Bereichs 4 ist eine Kante 12 ausgebildet, die eine Auflage zur Aufnahme eines in der Figur 1b nicht gezeigten Filterelementes bereitstellt.

Wird ein Filterelement auf die durch die Kante 12 ausgebildete Aufnahmevorrichtung aufgebracht, sind beheizbare Bereiche 4, 6, 8 des Heizelementes 2 auf beiden Seiten des Filterelementes vorhanden, so dass sowohl Fluid, das sich in Strömungsrichtung vor dem Filterelement befindet, als auch Fluid, das sich in Strömungsrichtung hinter dem Filterelement befindet und bereits durch das Filterelement gefiltert worden ist, in Kontakt mit wenigstens einem Bereich 4, 6, 8 des Heizelementes 2 befindet und durch das Heizelement 2 beheizbar ist. Dadurch ist das Fluid besonders effektiv und schnell erwärmbar. Insbesondere ist auch Fluid, das bereits durch das Filterelement gefiltert worden ist, schnell erwärmbar, da die wärmenden Bereiche 4, 6, 8 des Heizelementes 2 nicht durch das Filterelement von dem bereits gefilterten Fluid thermisch isoliert sind.

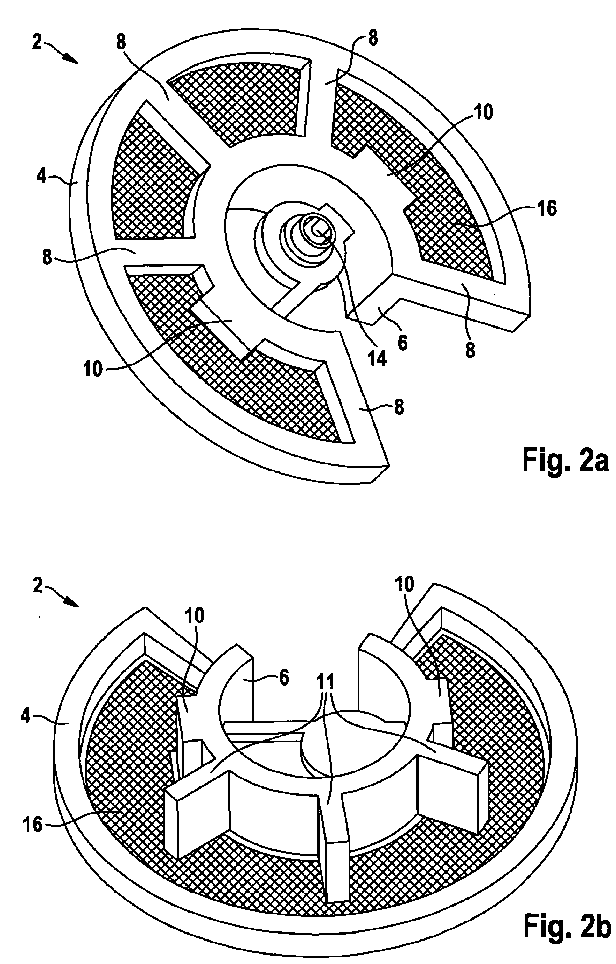

Die Figuren 2a und 2b zeigen das bereits in den Figuren 1a und 1b gezeigte Heizelement 2, wobei zusätzlich ein Filterelement 16 in das Heizelement 2 eingebracht ist.

In den Figuren 2a und 2b ist gut erkennbar, dass ein passend ausgeformtes Filterelement 16 besonders einfach und effektiv in die von der Kante 12 des äußeren bogenförmigen Bereichs 4 des Filterelementes 16 ausgebildete Aufnahmevorrichtung einbringbar ist und dass sowohl das Filterelement 16 als auch in den Figuren nicht gezeigtes Fluid, das sich auf beiden Seiten des Filterelementes 16 befindet, effektiv durch das Heizelement 2 beheizbar sind.

Die in der Figur 2a gezeigte Ansicht zeigt insbesondere, dass sich die beheizbaren Speichen 8 des Heizelementes 2 im Bereich unterhalb des Filterelementes 16 befinden und so Fluid, das sich im Betrieb in diesem Bereich unterhalb des Filterelementes 16 befindet, effektiv beheizbar ist.

Fig. 2b zeigt eine Seite des Heizelementes 2, die dem Tankvolumen zugewandt ist, wenn das Heizelement 2 in seiner Betriebsposition im Tank installiert ist. Durch die Höhe des inneren bogenförmigen Bereichs 6 und die am inneren bogenförmigen Bereich 6 ausgebildeten Rippen 11, welche in radialer Richtung vom inneren bogenförmigen Bereich 6 nach außen hervorragen, wird die Fläche, an der das ungefilterte Fluid im Tankvolumen in Kontakt mit dem Heizelement 2 ist, vergrößert und das ungefilterte Fluid ist besser beheizbar.

In einer in den Figuren nicht gezeigten Ausführungsform ist ein zweites Filterelement 16 auf der unteren Seite des Heizelementes 2, die in den in den Figuren 1a und 2a gezeigten Ansichten dem Betrachter zugewandt ist, angeordnet. Dadurch wird die nutzbare Filterfläche verdoppelt. Werden die beiden Filterelemente 16 nacheinander (in Reihe) vom Fluid durchströmt, so wird die Reinheit des gefilterten Fluids verbessert. Insbesondere können auf beiden Seiten des Heizelementes 2 verschiedene Filterelemente 16, z.B. ein Grobfilter und ein Feinfilter vorgesehen sein. Werden die beiden Filterflächen parallel durchströmt, so wird die pro Zeiteinheit aus dem Tankvolumen entnehmbare Fluidmenge vergrößert.

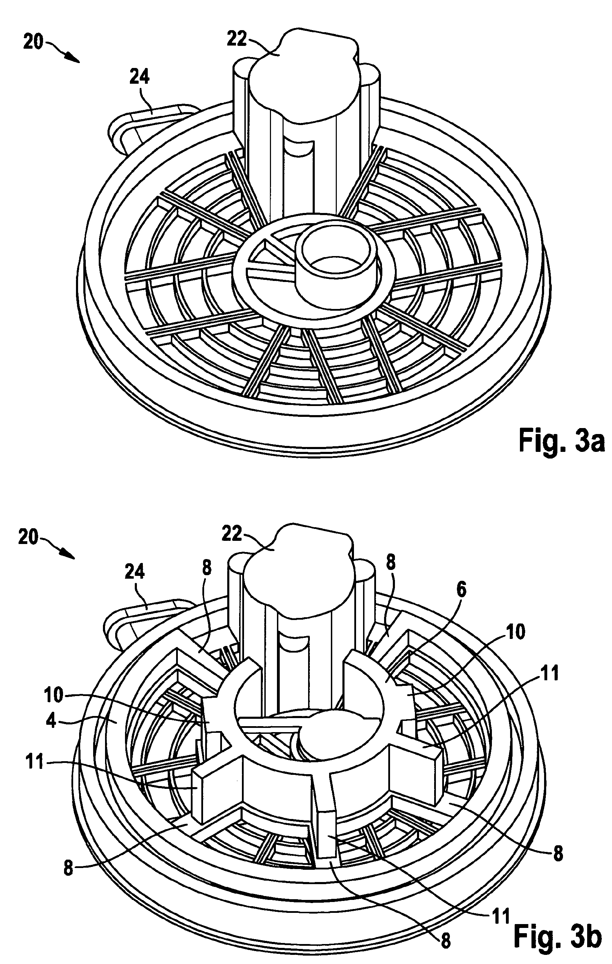

Figur 3a zeigt eine perspektivische Ansicht eines Ausführungsbeispiels eines Flansches 20 einer erfindungsgemäßen Fluidentnahmevorrichtung. Der Flansch 20 ist mit einem im Wesentlichen kreisförmigen Grundriss ausgebildet und weist auf seiner dem Betrachter zugewandten Oberseite, die im Betrieb dem Inneren des Tankvolumens zugewandt ist, ein Gehäuse 22 zur Aufnahme einer Fluidpumpe und an seinem äußeren Umfang einen elektrischen Anschluss 24 auf, über den das Heizelememt 2 und/oder die Fluidpumpe mit elektrischem Strom versorgbar sind.

Figur 3b zeigt eine perspektivische Ansicht des in der Figur 3a gezeigten Flansches 20, wobei ein erfindungsgemäßes Heizelement 2, wie es in den Figuren 1a und 1b gezeigt ist, auf den Flansch 20 aufgebracht ist.

Dadurch, dass die bogenförmigen Bereiche 4, 6 des Heizelementes 2 nicht als Vollkreise sondern in etwa als ¾ Kreise ausgebildet sind, ist es möglich, das Heizelement 2 so auf dem Flansch 20 anzuordnen, dass das Gehäuse 22 zur Aufnahme einer Fluidpumpe durch den ausgesparten Bereich des Heizelementes 2 hervorragt.

Die Abmessungen des Heizelementes 2 und des Flansches 20 sind so aufeinander abgestimmt, dass das Heizelement 2 gut und sicher, z.B. durch Verschweißen, Verkleben, Verschrauben oder Verklemmen bzw. Verclipsen, in einer fixierten Position auf dem Flansch 20 anbringbar ist.

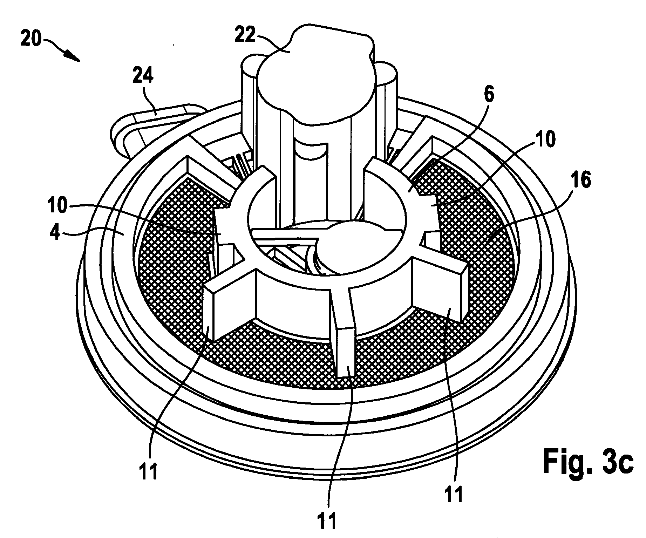

Figur 3c zeigt eine perspektivische Ansicht der in der Figur 3b gezeigten Kombination aus einem Flansch 20 und einem erfindungsgemäßen Heizelement 2, wobei zusätzlich ein Filterelement 16 in dem Heizelement 2 angeordnet ist.

Fluid, das aus dem Tankvolumen, oberhalb des Heizelementes 2 durch das Filterelement 16 in den Raum unterhalb des Filterelementes 16 gelangt ist, wird durch die in der Figur 3b gut erkennbaren Speichen 8 des Heizelementes 2 beheizt, wenn das Heizelement 2 in Betrieb ist. Der äußere bogenförmige Bereich 4 und der innere bogenförmige Bereich 6 des Heizelementes beheizen im Betrieb sowohl das Filterelement 16 als auch noch nicht gefiltertes Fluid, das sich im Tankvolumen oberhalb des Filterelementes 16 befindet.

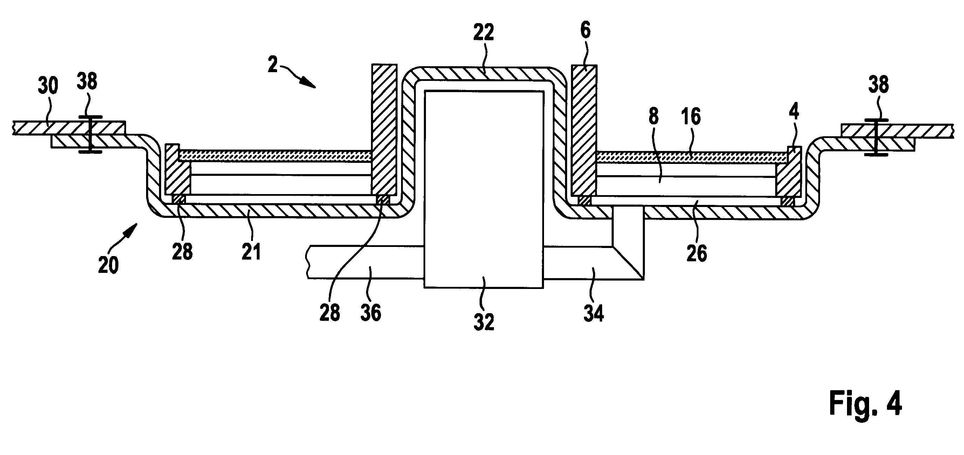

Figur 4 zeigt eine seitliche Schnittansicht durch einen Flansch 20 mit einer erfindungsgemäßen Fluidentnahmevorrichtung.

Das Tankvolumen, in dem im Betrieb Fluid gespeichert wird, befindet sich in der Darstellung der Fig. 4 im Bereich oberhalb des Bodens 30 und des Flansches 20.

Um das an dem Flansch 20 ausgebildete Pumpengehäuse 22 ist ein erfindungsgemäßes Heizelement 2 mit einem inneren ringförmigen Bereich 6 und einem äußeren ringförmigen Bereich 4 angeordnet, wobei die beiden ringförmigen Bereiche 4, 6 um das Pumpengehäuse 22 ausgebildet und durch mehrere radial ausgerichtete Bereiche (Speichen) 8 miteinander verbunden sind.

Zwischen der Unterseite des Heizelementes 2 und dem Boden 21 des Flansches 20 sind Abstandshalter 28 angeordnet, welche das Heizelement 2 in einem Abstand von dem Boden 21 des Flansches 20 abstützen, so dass zwischen dem Boden 21 des Flansches 20 und der Unterseite des Heizelementes 2 ein Fluidsammelraum 26 ausgebildet ist, in dem sich im Betrieb Fluid sammelt, das durch das Filterelement 16 gefiltert und ggf. durch das Heizelement 2 erwärmt worden ist.

Die Abstandshalter 28 können auch als Befestigungsgeometrie verwendet werden, um das Heizelement 2 z.B. durch Schweißen oder Kleben am Boden 21 des Flansches 20 zu befestigen.

Im Boden 21 des Flansches 20 ist ein Ablauf 34 ausgebildet, der mit der Saugseite einer Fluidpumpe 32 verbunden ist, die von außerhalb des Tankvolumens in das Pumpengehäuse 22 eingeführt ist. Im Betrieb saugt die Fluidpumpe 32 gefiltertes und beheiztes Fluid aus dem Fluidsammelraum 26 durch den Ablauf 34 an und gibt das angesaugte Fluid ausgangsseitig in eine Fluidleitung 36 aus, durch die das Fluid einer in den Figuren nicht gezeigten Einspritzvorrichtung zugeführt wird.

In einem in den Figuren nicht gezeigten Ausführungsbeispiel ist ein zweites Filterelement 16 auf der unteren, dem Boden 21 des Flansches 20 zugewandten Seite des Heizelementes 2 angeordnet. Die Ablauf 34 erstreckt sich in diesem Fall durch das zweite, untere Filterelement 16 bis in einen Fluidsammelraum 26, der oberhalb des zweiten Filterelementes 16 ausgebildet ist und der einerseits von dem ersten Filterelement 16 oberhalb des Heizelementes 12 und andererseits von dem zweiten Filterelement 16 unterhalb des Heizelementes 12 begrenzt ist. Die Abstandshalter 28 sind in diesem Fall entlang des Verlaufs des äußeren Bereiches 4 des Heizelementes 2 unterbrochen ausgebildet, um Fluidfluss aus dem Tankvolumen oberhalb des Flansches 20 durch die zwischen den Abstandshaltern 28 ausgebildeten Unterbrechungen und das zweite, untere Filterelement 16 in den Fluidsammelraum 26 zu ermöglichen. Die zur Verfügung stehende Filterfläche wird so vergrößert, insbesondere verdoppelt, und pro Zeiteinheit ist mehr Fluid aus dem Tankvolumen entnehmbar.

## Patentansprüche

1. Vorrichtung zur Entnahme von Fluid aus einem Tank mit wenigstens einem Filterelement (16), das ausgebildet ist, um aus dem Tank zu entnehmendes Fluid zu filtern und das Volumen des Tanks in ein erstes Teilvolumen , das sich in der Strömungsrichtung des Fluids vor dem Filterelement (16) befindet, und ein zweites Teilvolumen, das sich in Strömungsrichtung hinter dem Filterelement (16) befindet, teilt, und wenigstens einem Heizelement (2),wobei das Heizelement (2) und das Filterelement (16) derart in der Vorrichtung angeordnet sind, dass im Betrieb sowohl ungefiltertes Fluid, das sich im ersten Teilvolumen befindet, als auch Fluid, das sich in dem zweiten Teilvolumen befindet und durch das Filterelement (16) gefiltert worden ist, in Kontakt mit jeweils wenigstens einem Bereich (4, 6, 8) des Heizelementes (2) ist, **dadurch gekennzeichnet, daß** die Vorrichtung wenigstens einen Flansch (20) aufweist, welcher zur Aufnahme des Heizelements (2) ausgebildet ist und auf seiner im Betrieb dem Inneren des Tankvolumens zugewandten Seite ein Gehäuse (22) zur Aufnahme einer Fluidpumpe aufweist.

2. Vorrichtung nach Anspruch 1, wobei das Heizelement (2) wenigstens einen Bereich (8) aufweist, der sich in ein Volumen, in dem sich im Betrieb gefiltertes Fluid befindet, hinein erstreckt.

3. Vorrichtung nach einem der vorangehenden Ansprüche, wobei das Heizelement (2) wenigstens einen Bereich (12) zur Aufnahme des Filterelementes (16) aufweist.

4. Vorrichtung nach einem der vorangehenden Ansprüche, wobei das Heizelement (2) wenigstens ein Wärmeleitprofil aufweist, wobei das Wärmeleitprofil insbesondere ein Aluminiumspritzgussteil enthält.

5. Vorrichtung nach einem der vorangehenden Ansprüche, wobei das Heizelement (2) und/oder das Filterelement (16) eine Ummantelung aufweisen, die wärmeleitfähigen Kunststoff enthält.

6. Vorrichtung nach einem der Ansprüche 2 bis 5, wobei das Heizelement (2) wenigstens einen äußeren und wenigstens einen inneren ringförmigen Bereich (4, 6) aufweist, wobei die ringförmigen Bereiche (4, 6) insbesondere koaxial zueinander angeordnet und vorzugsweise durch wenigstens einen Bereich (8), der sich in radialer Richtung erstreckt, miteinander verbunden sind.

7. Vorrichtung nach einem der vorangehenden Ansprüche, wobei an wenigstens einem Bereich (6) des Heizelementes (2) Rippen (11) ausgebildet sind.

8. Fluidtank mit einer Vorrichtung zur Fluidentnahme nach einem der vorangehenden Ansprüche.

## Claims

1. Apparatus for removing fluid from a tank having at least one filter element (16) which is configured for filtering fluid to be removed from the tank and divides the volume of the tank into a first part volume which is situated upstream of the filter element (16) in the flow direction of the fluid and a second part volume which is situated downstream of the filter element (16) in the flow direction, and at least one heating element (2), the heating element (2) and the filter element (16) being arranged in the apparatus in such a way that, during operation, both unfiltered fluid which is situated in the first part volume and fluid which is situated in the second part volume and has been filtered by the filter element (16) are in contact with in each case at least one region (4, 6, 8) of the heating element (2), **characterized in that** the apparatus has at least one flange (20) which is configured for receiving the heating element (2) and has a housing (22) for receiving a fluid pump on its side which faces the interior of the tank volume during operation.

2. Apparatus according to Claim 1, the heating element (2) having at least one region (8) which extends into a volume, in which filtered fluid is situated during operation.

3. Apparatus according to one of the preceding claims, the heating element (2) having at least one region (12) for receiving the filter element (16).

4. Apparatus according to one of the preceding claims, the heating element (2) having at least one heat conducting profile, the heat conducting profile containing, in particular, an injection-moulded aluminium part.

5. Apparatus according to one of the preceding claims, the heating element (2) and/or the filter element (16) having a covering which contains thermally conductive plastic.

6. Apparatus according to one of Claims 2 to 5, the heating element (2) having at least one outer and at least one inner annular region (4, 6), the annular regions (4, 6) being arranged, in particular, coaxially with respect to one another and preferably being connected to one another by way of at least one region (8) which extends in the radial direction.

7. Apparatus according to one of the preceding claims, fins (11) being configured on at least one region (6) of the heating element (2).

8. Fluid tank having an apparatus for removing fluid according to one of the preceding claims.

## Revendications

1. Dispositif pour prélever du fluide d'un réservoir, comprenant au moins un élément de filtre (16) qui est réalisé pour filtrer le fluide à prélever du réservoir et qui divise le volume du réservoir en un premier volume partiel qui se trouve, dans le sens de l'écoulement du fluide, avant l'élément de filtre (16), et un deuxième volume partiel qui se trouve, dans le sens de l'écoulement, derrière l'élément de filtre (16), et au moins un élément chauffant (2), l'élément chauffant (2) et l'élément de filtre (16) étant disposés dans le dispositif de telle sorte que pendant le fonctionnement, du fluide non filtré qui se trouve dans le premier volume partiel, ainsi que du fluide qui se trouve dans le deuxième volume partiel et qui a été filtré par l'élément de filtre (16), soient en contact avec à chaque fois au moins une région (4, 6, 8) de l'élément chauffant (2), **caractérisé en ce que** le dispositif présente au moins une bride (20) qui est réalisée pour recevoir l'élément chauffant (2) et qui, sur son côté tourné pendant le fonctionnement vers l'intérieur du volume du réservoir, présente un boîtier (22) pour recevoir une pompe de fluide.

2. Dispositif selon la revendication 1, dans lequel l'élément chauffant (2) présente au moins une région (8) qui s'étend dans un volume dans lequel se trouve du fluide filtré pendant le fonctionnement.

3. Dispositif selon l'une quelconque des revendications précédentes, dans lequel l'élément chauffant (2) présente au moins une région (12) pour recevoir l'élément de filtre (16).

4. Dispositif selon l'une quelconque des revendications précédentes, dans lequel l'élément chauffant (2) présente au moins un profilé thermoconducteur, le profilé thermoconducteur contenant notamment une pièce moulée par injection d'aluminium.

5. Dispositif selon l'une quelconque des revendications précédentes, dans lequel l'élément chauffant (2) et/ou l'élément de filtre (16) présentent une enveloppe qui contient du plastique thermoconducteur.

6. Dispositif selon l'une quelconque des revendications 2 à 5, dans lequel l'élément chauffant (2) présente au moins une région annulaire extérieure et au moins une région annulaire intérieure (4, 6), les régions annulaires (4, 6) étant notamment disposées coaxialement l'une à l'autre et étant connectées l'une à l'autre de préférence par au moins une région (8) qui s'étend dans la direction radiale.

7. Dispositif selon l'une quelconque des revendications précédentes, dans lequel des nervures (11) sont réalisées au niveau d'au moins une région (6) de l'élément chauffant (2).

8. Réservoir de fluide comprenant un dispositif pour prélever du fluide selon l'une quelconque des revendications précédentes.
